# EUROPÄISCHE PATENTSCHRIFT

(11) **EP 0 852 560 B1**
(45) Veröffentlichungstag und Bekanntmachung des Hinweises auf die Patenterteilung: **14.02.2001**
(21) Anmeldenummer: 96933339.2
(22) Anmeldetag: 19.09.1996
(51) Int. Cl.: B65G 47/08, B65G 57/24, B65G 57/10, B65G 47/82

(54) **VORRICHTUNG ZUM TRANSPORTIEREN EINER GLASBEHÄLTERLAGE ÜBER EINE PALETTE**
DEVICE FOR TRANSPORTING A LAYER OF GLASS CONTAINERS ABOVE A PALLET
DISPOSITIF POUR TRANSPORTER UNE COUCHE DE RECIPIENTS EN VERRE SUR UNE PALETTE

(30) Priorität: 27.09.1995 DE 19535908
(43) Veröffentlichungstag der Anmeldung: 15.07.1998
(73) Patentinhaber: FIRMA HERMANN HEYE, D-31683 Obernkirchen (DE)
(72) Erfinder: BRONISCH, Helmut, D-31688 Nienstädt (DE); FÜHR, Hans-Bernhard, D-31655 Stadthagen (DE); BIEHLER, Hubert, D-34131 Kassel (DE)
(74) Vertreter: Kosel, Peter, Dipl.-Ing.
(86) Internationale Anmeldenummer: EP9604102
(87) Internationale Veröffentlichungsnummer: WO9711899

(56) Entgegenhaltungen:
- EP-A- 0 659 664
- GB-A- 2 168 024
- US-A- 3 937 336
- US-A- 5 074 744
- US-A- 5 271 709

## Beschreibung

Die Erfindung betrifft eine Vorrichtung nach dem Oberbegriff des Anspruchs 1.

Bei einer bekannten Vorrichtung dieser Art (EP 0 659 664 A1 und US 5 271 709 A) wird die formatierte Lage von Behältern durch stationäre Führungswände seitlich geführt. An intermittierend parallel zur Förderrichtung antreibbaren Endlosketten sind in einem der Länge der Lage entsprechenden Abstand Schiebearme befestigt. Ein vorderer Schiebearm liegt vor der Lage und ein hinterer Schiebearm hinter der Lage, wenn diese von der als Transportband ausgebildeten Unterlage über eine stationäre Platte hinweg über die Palette geschoben wird. Bevor die Lage ihre Sollposition über der Palette erreicht hat, löst sich der vordere Schiebearm von der Lage. Dadurch entsteht die Gefahr, daß vordere Behälter der Lage in Unordnung geraten oder abstürzen. Sobald der hintere Schiebearm die Lage in ihre Sollposition über der Palette geschoben hat, müssen die Endlosketten in der entgegengesetzten Richtung bewegt werden, bis der hintere Schiebearm seine Ausgangslage eingenommen hat. Erst danach kann die nächste formatierte Lage in Berührung mit dem zugehörigen vorderen Schiebearm bewegt werden.

Aus der US 3 937 336 A ist es an sich bekannt, oben offene leere Dosen auf einem Transportband gegen eine vordere Formatiertraverse zu fördern und dabei seitlich durch Führungswände zu führen. Wenn eine Lage Dosen formatiert ist, wird ein an der Formatiertraverse angelenkter Rahmen durch eine stationäre Hubvorrichtung abgesenkt, bis Schiebefinger des Rahmens in die Dosen der hintersten Dosenreihe eingreifen. Sodann wird die Lage dadurch über die Palette geschoben, daß seitliche, mit der Formatiertraverse gekuppelte Endlosketten entsprechend angetrieben werden. Bevor durch Umsteuerung der Kettenantriebe die Formatiertraverse wieder in ihre Ausgangslage zurückgefahren werden kann, muß die Palette in einem Palettenelevator so weit abgesenkt werden, bis die Schiebefinger sich wieder außerhalb der übergeschobenen Dosen befinden.

Aus der US 5 074 744 A ist es an sich bekannt, eine vordere Reihe oben offener leerer Dosen auf einer Unterlage gegen Formatierstifte zu fördern. Die Formatierstifte sind unter die Unterlage versenkbar und stationär angeordnet. Wenn sich hinter der vorderen Reihe mindestens eine vollständige formatierte Lage der Dosen angestaut hat, werden Schiebestifte eines Schlittens in eine hintere Reihe der Lage abgesenkt. Gleichzeitig werden Anhaltestifte einer stationären Anhaltevorrichtung in die Dosen der an der hinteren Reihe anliegenden vorderen Reihe der nachfolgenden Lage abgesenkt. Sodann werden die Formatierstifte abgesenkt und der Schlitten mit der Lage über eine Palette geschoben. Bis dahin ist die Lage durch Führungsschienen seitlich geführt. Vom Augenblick des Absenkens der Formatierstifte bis zum Ende des Überschiebens der Lage über die Palette ist allerdings die vordere Reihe der Dosen in keiner Weise gehalten. Dies kann zu Unordnung am vorderen Ende der Lage und zum Herabfallen von Dosen von der Palette führen.

Aus dem Katalog "Automatische Palettiersysteme für Glasbehälter" der Emmeti S.p.A., Via Galvani, 9, I-42027 Montecchio-R.E., Italien, Modell MT 578, ist eine Vorrichtung an sich bekannt, bei der die Palette stets in derselben Ebene bleibt. Jede Lage wird durch Greifleistenpaare einer Greifvorrichtung gegriffen, zu der Palette transportiert und entweder auf der Palette oder auf einer schon auf der Palette stehenden Lage abgesetzt. Die Greifleisten weisen in der Regel Greifschläuche auf, die wahlweise an eine Druckluftquelle oder eine Unterdruckleitung anzuschließen sind. Die Beschädigung eines Greifschlauches oder seiner Versorgung mit Druckluft führt zum Fallenlassen von Glasbehältern. Für Transport und zielgenaues Absetzen der Lagen sind viel Aufwand und Zeit erforderlich.

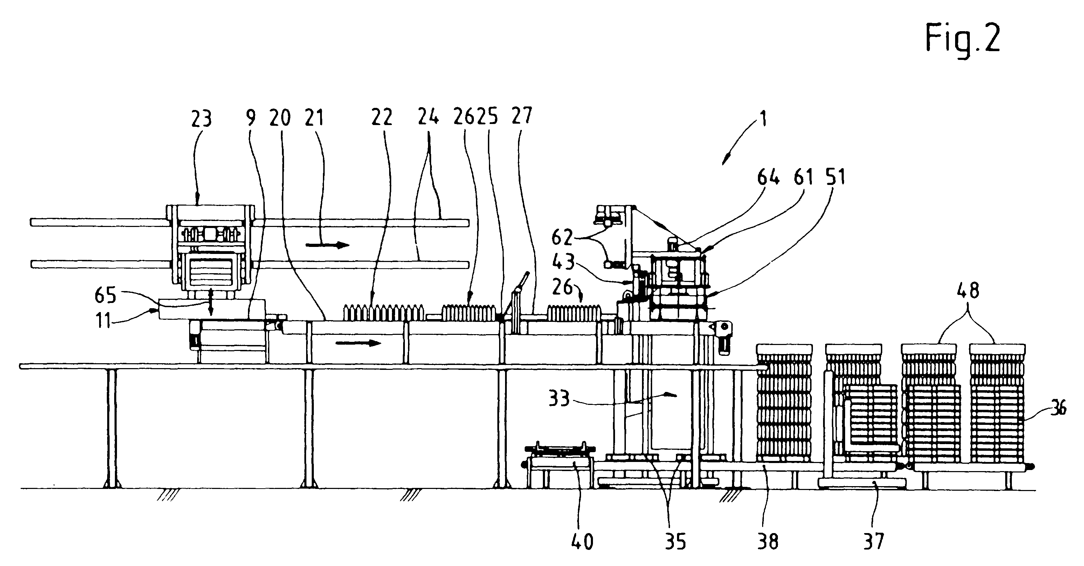

Aus der DE 39 28 028 A1 ist es an sich bekannt, Stückgüter zu palettieren oder zu depalettieren und wahlweise neue Glasbehälter (Flaschen) zu depalettieren. Das Palettieren neuer Glasbehälter ist darin njcht offenbart. Beim Palettieren durchlaufen die Stückgüter im wesentlichen in einer Ebene und im wesentlichen geradlinig einen Zulaufbereich, eine die Stückgüter auf mehrere Reihen verteilende Verteilerstation, eine Gruppierstation, in der eine Formation der Stückgüter gebildet wird, einen Schiebebereich mit einem Schichten- oder Lagenschieber und schließlich einen Positionierschiebebereich mit einem Positionsschieber, der die Stücklage über eine zu beladende Palette in einer Beladestation und auf eine dortige Beladeplatte schiebt. Die Beladeplatte wird dann unter der Stückgutlage weggezogen, so daß die Stückgutlage entweder auf die zu beladende Palette oder auf eine zuvor aufgeladene Stückgutlage fällt. Anschließend wird die Palette in einem Vollpalettenaufzug um eine Teilung abgesenkt und ist dann bereit, die nächste Stückgutlage aufzunehmen. Wesentlich ist, daß jede formatierte Stückgutlage (s. insbesondere Fig. 2) zunächst von dem Lagenschieber bis in den Wirkungsbereich des nachfolgenden, gesonderten Positionsschiebers geschoben wird, und daß dann der Positionsschieber die Stückgutlage übernimmt und bis auf die Beladeplatte über der Palette schiebt. Durch diese beiden aufeinanderfolgenden Schiebevorrichtungen entsteht erheblicher baulicher, betrieblicher und Steuerungsaufwand. Diese Palettieranlage ist zum Palettieren verhältnismäßig kleiner und wenig standfester Glasbehälter nicht geeignet.

Aus der Firmenschrift: Palettieranlagen für Säcke, Maschinenfabrik Möllers GmbH & Co., Beckum, Deutschland, ist es an sich bekannt, Säcke liegend und mit lagenweise abwechselnden Packbild zu palettieren. Gemäß den Seiten 5 und 10 wird jede Lage aus einer Lagenzeile aus längsliegenden Säcken und einer weiteren Lagenzeile aus quergedrehten Säcken zusammengestellt. Dazu wird die erste Lagenzeile vor einer Anschlagschiene gebildet und durch eine Schiebevorrichtung quer in eine Warteposition geschoben. Sodann wird die zweite Lagenzeile vor der Anschlagschiene gesammelt und dann durch die inzwischen zurückgekehrte Schiebevorrichtung quer in Berührung mit der ersten Lagenzeile und mit dieser weiter auf einen mittig geteilten Ladeschieber über eine zu beladende Palette geschoben. Anschließend wird die Lage durch umgebende Seitenwände, von denen zwei benachbarte waagerecht zustellbar sind, kalibriert. Danach werden die Hälften des Ladeschiebers aufgezogen und die Lage auf die Palette abgelegt. Sodann wird die Palette in einem Palettenfahrstuhl um eine Teilung abgesenkt und der Ladeschieber wieder zugeschoben, so daß der nächste Ladezyklus folgen kann. Auch dieser Palettierer eignet sich nicht zum Palettieren von Glasbehältern. Aus der DE-GM 1 894 278 ist es an sich bekannt, Stückgut reihenweise von einem Liefertransportband unmittelbar auf eine Verschiebeplattform über der zu beladenden Palette quer abzuschieben. Die Verschiebeplattform wird unter der fertigen Stückgutlage weggezogen. Dadurch wird die Stückgutlage auf die Palette abgelegt. Sodann wird die Palette in einem Palettenfahrstuhl um eine Teilung abgesenkt und anschließend durch seitliche Kalibrierleisten kalibriert.

Die EP 0 293 835 A1 zeigt als an sich bekannt einen Palettierer, bei dem Dosen reihenweise über eine in einem Palettenfahrstuhl lagenweise absenkbare Palette geschoben werden. Auf die Palette und auf jede Lage wird ein Einleger gelegt. Vor dem Überschieben der ersten Dosenreihe und bis nach dem Überschieben der letzten Dosenreihe einer Lage auf den Einleger wird eine Einheit in einen Zwischenraum zwischen dem Einleger und einer die nachfolgenden Dosenreihen tragenden Unterlage eingeschwenkt. Die Einheit weist eine Platte und ein unter der Platte in und entgegen der Laderichtung verschiebbares Plattenelement auf. Im ausgeschobenen Zustand liegt das Plattenelement mit seiner Vorderkante über der benachbarten Kante des Einlegers.

Der Erfindung liegt die Aufgabe zugrunde, den Transport der Lagen über die Palette zu beschleunigen und sicherer zu gestalten.

Diese Aufgabe ist durch die Merkmale des Anspruchs 1 gelöst.

Bei der Unterlage der Glasbehälter kann es sich z.B. um ein Lagentransportband handeln, auf dem die Lagen formatiert werden. Das Lagentransportband führt die Lagen nacheinander der Schiebevorrichtung zu. Die Schiebevorrichtung schiebt jeweils eine vollständige, formatierte Lage über die Palette, ohne daß Gefahr besteht, daß sich die Formatierung der Lage ändert. Auch können dank des Überschiebens keine Glasbehälter während des Transports über die Palette auf ein tieferes Niveau hinabfallen. Das Überschieben der Lage kann auf vergleichsweise kurzem Weg und mit hoher Geschwindigkeit vor sich gehen. Die Überschiebeleistung ist entsprechend hoch.'Die Zurückbewegung der Schiebevorrichtung von ihrer Schiebeendstellung in ihre Ausgangsstellung kann entweder durch Zurückschieben oder durch Heben und anschließendes Zurückfahren mit Absenken erfolgen. Die Schiebevorrichtung ist kostengünstig und dennoch leicht zu handhaben und funktionssicher.

Dank der Merkmale des Anspruchs 2 braucht die Schiebevorrichtung zur Übernahme einer Lage nicht angehoben und wieder abgesenkt zu werden. Dadurch wird einerseits Zyklusdauer eingespart und andererseits der bauliche und betriebliche Aufwand gering gehalten.

Bei den Seitenwänden gemäß Anspruch 3 handelt es sich um solche, die einerseits der Breite und andererseits der Länge der Lage gegenüberliegen.

Durch die Merkmale des Anspruchs 4 ist eine besonders günstige Bewegbarkeit der Seitenwände geschaffen.

Gemäß Anspruch 5 ist die Schiebevorrichtung vorzugsweise während eines Arbeitszyklus um 90 ° hin und zurück schwenkbar. Dies schafft die Möglichkeit, die Lage entweder mit ihrer Länge oder ihrer Breite vorweg in der Schiebevorrichtung aufzunehmen und die Lage wiederum entweder mit ihrer Länge oder ihrer Breite vorweg über die Palette zu schieben.

Die Wagenbahn gemäß Anspruch 6 ist vorzugsweise geradlinig ausgebildet. Wagenbahn und Wagen stellen eine kostengünstige und betriebssichere Transportmöglichkeit für die Schiebevorrichtung dar.

Die Merkmale des Anspruchs 7 garantieren eine reproduzierbare und gut kontrollierbare Bewegung der Schiebevorrichtung.

Die Ausbildung gemäß Anspruch 8 bietet bauliche und betriebliche Vorteile.

Gemäß Anspruch 9 ist die Schiebevorrichtung zuverlässig gehalten.

Durch die Merkmale des Anspruchs 10 ergibt sich ein besonders günstiger Schwenkantrieb über die Welle.

Das Stützelement gemäß Anspruch 11 kann z.B. als ausreichend steifes Blech ausgebildet und in seitlichen Führungen durch einen Antrieb verschiebbar sein. Die Lage läßt sich besonders sicher über die Palette schieben. Die Dicke des Randbereichs des Stützelements kann z.B. 1,5 bis 2 mm betragen.

Gemäß Anspruch 12 lassen sich auch Bodenverpackungen mit gleichem Vorteil wie andere Verpackungsarten einsetzen.

Die Palettierstation gemäß Anspruch 13 bietet einen zügigen und störungsfreien Palettierbetrieh. Die Entnahmeebene ist vorzugsweise identisch mit der Tiefststellung der Tragvorrichtung.

Durch die Merkmale des Anspruchs 14 können die voll beladenen Paletten unmittelbar auf Förderketten abgesetzt werden, auf denen der Weitertransport und die Endbehandlung der Paletten stattfinden kann.

Gemäß Anspruch 15 ergibt sich eine besonders einfache und wirkungsvolle Art des Hubantriebs für die Tragvorrichtung.

Gemäß Anspruch 16 wird die Lage gleich beim Absenken zentriert und so die äußeren Glasbehälter daran gehindert, sich aus dem vorgegebenen Packschema zu entfernen. Der Zentrierrahmen weist insbesondere vier quer einstellbare Umfangsteile auf, um sowohl die noch leere Palette, als auch danach jede Lage genau auf eine Mittenlängsachse des Turms zu zentrieren. Auch die zunächst heruntergeklappte Seitenwand jedes Bodens einer Bodenverpackung läßt sich durch den zugehörigen Umfangsteil des Zentrierrahmens selbsttätig hochklappen.

Die Maßnahmen gemäß Anspruch 17 ersparen einen zusätzlichen Arbeitsschritt für das Hochklappen der zunächst offenen Seitenwände der Böden. Die Führungsplatten sind vorzugsweise in einem geringen Abstand von der Palette und den darauf befindlichen Lagen angeordnet.

Gemäß Anspruch 18 lassen sich die hochgeklappten Seitenwände der Böden auf einfache Weise auch dann hochgeklappt halten, wenn die Palette aus dem Turm entlassen wird.

Das Heften gemäß Anspruch 19 kann z.B. durch Klammern oder Heißschmelzkleber erfolgen.

Diese und weitere Merkmale und Vorteile der Erfindung werden nachfolgend anhand der in den Zeichnungen dargestellten Ausführungsbeispiele näher erläutert. Es zeigt
Fig. 1 die Draufsicht auf eine Palettieranlage mit eine Vorrichtung zum Transportieren einer formatierten Lage über eine Palette,
Fig. 2 eine Seitenansicht der Palettieranlage gemäß Fig 1,
Fig. 3 eine Stirnansicht einer Wagenbahn mit daran aufgehängter Schiebevorrichtung,
Fig. 4 die Seitenansicht gemäß Linie IV-IV in Fig. 3,
Fig. 5 die Draufsicht auf die Vorrichtung gemäß Fig. 3 und 4,
Fig. 6 die Draufsicht auf ein Grundgestell eines Turms einer Palettierstation,
Fig. 7 die Schnittansicht nach Linie VII-VII in Fig. 6,
Fig. 8 die Ansicht gemäß Linie VIII-VIII in Fig. 7,
Fig. 9 die Ansicht gemäß Linie IX-IX in Fig. 8,
Fig. 10 die Draufsicht auf die Palettierstation entsprechend Fig. 6,
Fig. 11 die Schnittansicht nach Linie XI-XI in Fig. 10,
Fig. 12 die Schnittansicht nach Linie XII-XII in Fig. 11,
Fig. 13 einen Längsschnitt durch den oberen Bereich des Turms in einer anderen Betriebsstellung als Fig. 11,
Fig. 14 eine Abwandlung eines Details in Fig. 12 in vergrößerter Darstellung,
Fig. 15 eine schematische perspektivische Darstellung einiger Elemente einer sogeannnten Bodenverpackung und
Fig. 16 bis 22 in jeweils schematischer Darstellung unterschiedliche Betriebsweisen einer Schiebevorrichtung für die Lagen der Glasbehälter.

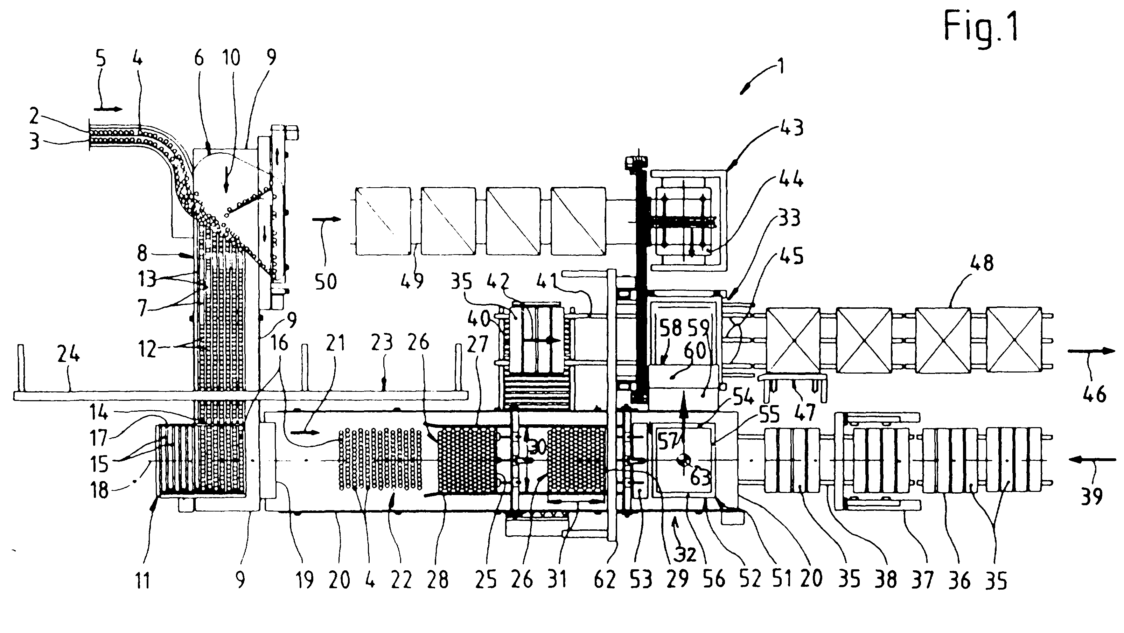

Fig. 1 zeigt die Draufsicht auf eine Palettieranlage 1.

Zwei Reihen 2 und 3 von stehenden Glasbehältern 4 werden in Richtung eines Pfeils 5 einer an sich bekannten Zuteilvorrichtung 6 zugeführt. Die Zuteilvorrichtung 6 verteilt die Glasbehälter 4 auf sieben Gassen 7 einer Auflaufvorrichtung 8. Die Auflaufvorrichtung 8 weist ein die Glasbehälter 4 tragendes Auflauftransportband 9 auf, dessen Obertrum sich in einer ersten Transportrichtung 10 bewegt. Der Obertrum des Auflauftransportbandes 9 befindet sich unterhalb der Zuteilvorrichtung 6, unterhalb der Gassen 7 und erstreckt sich auch unterhalb einer Schiebevorrichtung 11.

In jeder Gasse 7 wird eine Reihe 12 der Glasbehälter 4 gebildet. Dazu wird jede Gasse 7 von zwei seitlichen Trennwänden 13 begrenzt. Der Abstand zwischen benachbarten Trennwänden 13 ist je nach der maßgebenden Querdimension, meist dem Durchmesser, der Glasbehälter 4 einstellbar.

An einem vorderen Abgabeende jeder Gasse 7 ist eine an sich bekannte Stoppvorrichtung 14 angeordnet. Die Stoppvorrichtungen 14 gestatten es, die stromaufwärts davon befindliche Reihe 12 anzuhalten. Die Schiebevorrichtung 11 weist mit den Reihen 12 fluchtende Aufnahmeschächte 15 auf, die mit vorderen Enden 16 der Reihen 12 gefüllt werden. Wenn, wie in Fig. 1 dargestellt, die ersten sieben Aufnahmeschächte 15 auf diese Weise mit vorderen Reihenenden 16 gefüllt sind, werden die Stoppvorrichtungen 14 aktiviert und die Schiebevorrichtung 11 in Fig. 1 nach rechts verfahren, bis die noch leeren Aufnahmeschächte 15 gegenüber genügend gefüllten Gassen 7 stehen. Sodann werden auch die restlichen Aufnahmeschächte 15 mit vorderen Reihenenden 16 gefüllt. Ein als Schieber ausgebildetes Verschlußorgan 17 verschließt sodann Einlässe der Aufnahmeschächte 15.

Die Schiebevorrichtung 11 wird anschließend in einer Querebene 18 von dem Auflauftransportband 9 über ein stationäres Gleitblech 19 auf ein Lagentransportband 20 übergeschoben. Ein Obertrum des Lagentransportbandes 25 bewegt sich kontinuierlich oder schrittweise in einer zweiten Transportrichtung 21. In einer Schiebeendstellung wird die Schiebevorrichtung 11 angehoben und hinterläßt eine Lage 22 der Glasbehälter 4 auf dem Lagentransportband 20. Die zu der Lage 22 erforderlichen vorderen Reihenenden 16 können auch bei geringerer Anzahl der Aufnahmeschächte 15 der Schiebevorrichtung 11 nacheinander von dem Auflauftransportband 9 auf das Lagentransportband 20 übergeschoben werden.

Nach dem Anheben der Schiebevorrichtung 11 über die Lage 22 wird die Schiebevorrichtung 11 in ihre in Fig. 1 gezeichnete Ausgangsposition zurückgeführt. Alle zuvor erwähnten Bewegungen erhält die Schiebevorrichtung 11 von einer in Fig. 1 und 2 nur schematisch angedeuteten Transportvorrichtung 23. Bestandteil der Transportvorrichtung 27 ist eine geradlinige, stationäre Wagenbahn 24, die sich über den gesamten Bewegungsbereich der Schiebevorrichtung 11 und parallel zu der Querebene 18 erstreckt.

Durch eine erste Anschlagschiene 25 wird die Lage 22 zu einer formatierten Lage 26 komprimiert. Auf beiden Seiten und in Berührung mit der formatierten Lage 26 sind oberhalb des Lagentransportbandes 20 Führungsschienen 27 und 28 vorgesehen. Damit kann eine weitere formatierte Lage 26 bereitgestellt werden. Die Länge 30 der formatierten Lage 26 entspricht der lichten Weite oder dem Abstand zwischen den Führungsschienen 27, 28. Die Breite der formatierten Lage 26 ist mit 31 eingezeichnet.

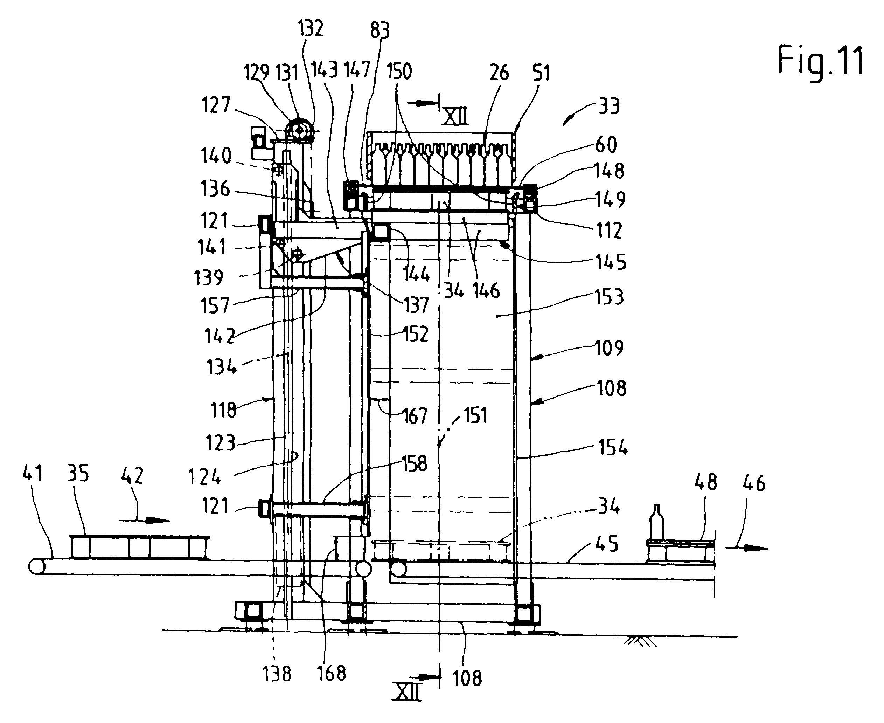

Wenn die zweite Anschlagschiene 29 hochgezogen wird, wird die bis dahin davor gestaute formatierte Lage 26 durch das Lagentransportband 20 bis in eine Vorrichtung 32 gefördert, durch welche die formatierte Lage 26 von dem als Unterlage dienenden Lagentransportband 20 über eine in einer Palettierstation 33 angeordnete Palette 34 (Fig. 11) transportiert wird.

Der Palettierstation 33 werden leere Paletten 35 in einer unteren Ebene zugeführt. Dazu werden Stapel 36 (Fig. 2) leerer Paletten 35 in einer Vereinzelungsvorrichtung 37 vereinzelt und auf einem Längsfördermittel 38 in Richtung eines Pfeils 39 zugeführt. Ein Querfördermittel 40 fördert die leeren Paletten 35 in Querrichtung, bis sie auf ein weiteres Längsfördermittel 41 gelangen und zur Einbringung in die Palettierstation 33 in Richtung eines Pfeils 42 bereit sind.

Die in die Palettierstation 33 eingebrachte leere Palette 35 wird in der Palettierstation 33 in später zu beschreibender Weise nach oben gefördert, dort mit einer formatierten Lage 26 beladen und um eine Höhenteilung abgesenkt. Sodann wird durch eine an sich bekannte Einlegevorrichtung 43 ein Einleger 44 auf die auf der Palette 34 (Fig. 11) stehende, formatierte Lage 26 aufgelegt. Bei diesem Einleger 44 kann es sich um einen Boden, einen Deckel oder eine Platte handeln. Die Platte kann aus Pappe oder Kunststoff bestehen.

Wenn die Palette 34 mit Lagen 26 voll beladen ist, wird sie in der Palettierstation 33 auf drei zueinander parallelen und im Abstand voneinander befindlichen Förderketten 45 abgesetzt und in Richtung eines Pfeils 46 aus der Palettierstation 33 herausbewegt. An die Palettierstation 33 schließt sich unmittelbar eine Heftstation 47 an. In der Heftstation 47 werden in später zu beschreibender Weise zunächst offene Seitenwände von Böden einer Bodenverpackung an die benachbarten, schon geschlossenen Seitenwände des Bodens angeheftet. Die so fertiggestellten beladenen Paletten 48 werden durch mit den Förderketten 45 fluchtende Förderketten in Richtung des Pfeils 46 abgefördert. Die Einleger 44 werden der Einlegevorrichtung 43 durch ein Längsfördermittel 49 in Richtung des Pfeils 50 stapelweise zugeführt.

Die Vorrichtung 32 weist eine weitere Schiebevorrichtung 51 auf mit einem Rahmen 52, dessen lichte Innenmaße der Länge 30 und der Breite 31 der formatierten Lage 26 entsprechen. Der Rahmen 52 hat Seitenwände 53 bis 56, von denen die der formatierten Lage 26 zugewandte Seitenwand 53 durch Hochschwenken aus dem Weg der formatierten Lage 26 bewegt ist. Der Rahmen 52 befindet sich in geringem Abstand oberhalb des Obertrums des Lagentransportbandes 20. Wenn nun die zweite Anschlagschiene 29 hochgezogen wird, wird die formatierte Lage 26 unter der hochgeschwenkten Seitenwand 53 hinweg in den Rahmen 52 hineingefördert. Gleich anschließend wird die Seitenwand 53 hinabgeschwenkt und dadurch der Rahmen 52 geschlossen. Die Schiebevorrichtung 51 wird sodann in Richtung eines Pfeils 57 zusammen mit der in dem Rahmen 52 eingeschlossenen formatierten Lage 26 quer zu der zweiten Transportrichtung 21 von dem Lagentransportband 20 abgeschoben. Bei Fortsetzung der Schiebebewegung gleitet die weiterhin formatierte Lage 26 über ein Stützelement 58 über die Palette 34 (Fig. 11). Das Stützelement 58 weist einen stationären Teil 59 im Anschluß an das Lagentransportband 20 auf, und einen der Palettierstation 33 zugewandten Randbereich 60. Der Randbereich 60 ist in später zu beschreibender Weise in und entgegengesetzt zu der Richtung des Pfeils 57 relativ zu dem stationären Teil 59 verschiebbar.

Die Schiebevorrichtung 51 ist durch einen Wagen 61 (Fig. 2) gehalten, der entlang einer Wagenbahn 62 parallel zu dem Pfeil 57 hin und her verfahrbar ist. Bei dieser normalen Betriebsweise wird mit dem Zurückfahren der Schiebevorrichtung 51 aus der Palettierstation 33 gewartet, bis die Palette 34 (Fig. 11) um eine Höhenteilung abgesenkt worden ist. Die Schiebevorrichtung 51 kann jedoch auch gleich nach Beendigung des Überschiebens von der übergeschobenen formatierten Lage 26 abgehoben und sodann in ihre Ausgangslage zurückgefahren werden. In diesem letzteren Fall weist der Wagen 61 (Fig. 2) auch einen Hub- und Senkmechanismus für den Schieberahmen 51 auf.

Es ist vorteilhaft, die Palette 34 (Fig. 11) so auf den Förderketten 45 abzusetzen, daß sich die Länge 30 der auf der Palette 34 befindlichen formatierten Lagen 26 rechtwinklig zu dem Pfeil 46 erstreckt. In diesem Fall kann die Unterseite der Palette 34 besonders gut mit den drei Förderketten 45 zusammenarbeiten. Günstig ist es dazu, wenn sich die Länge 30 der formatierten Lagen 26, wie in Fig. 1 gezeichnet, quer zu der zweiten Transportrichtung 21 erstreckt.

Falls dagegen die Länge 30 der formatierten Lagen 26 auf dem Lagentransportband 20 parallel zu der zweiten Transportrichtung 21 angeordnet ist, muß der Rahmen 52 um eine senkrechte Achse 63 gegenüber der in Fig. 1 gezeichneten Stellung um 90 ° geschwenkt werden, bis entweder die Seitenwand 54 oder die Seitenwand 56 in Richtung der aufzunehmenden formatierten Lage 26 zeigt. Diese Seitenwand 54 oder 56 muß dann wie die Seitenwand 53 in Fig. 1 aus dem Weg der ankommenden formatierten Lage 26 bewegbar, z.B. hochschwenkbar sein. Nach Aufnahme der formatierten Lage 26 in den so positionierten Rahmen 52 wird die geöffnete Seitenwand geschlossen, und der Überschiebezyklus zur Palettierstation 33 kann beginnen. Dabei muß dann die Schiebevorrichtung 51 um die senkrechte Achse 63 um 90 ° geschwenkt werden, damit die Länge 30, wie erwähnt, rechtwinklig zu dem Pfeil 46 in der Palettierstation 33 angeordnet ist.

Für diese Schwenkungen des Rahmens 52 um die senkrechte Achse 63 ist an dem Wagen 61 gemäß Fig. 2 ein Elektro-Servoantrieb 64 montiert.

Fig. 2 verdeutlicht, wie die Transportvorrichtung 23 in der zweiten Transportrichtung 21 und entgegengesetzt dazu an der Wagenbahn verfahrbar ist. Außerdem ist durch einen Doppelpfeil 65 angedeutet, daß die Schiebevorrichtung 11 an der Transportvorrichtung 23 heb- und senkbar gehalten ist.

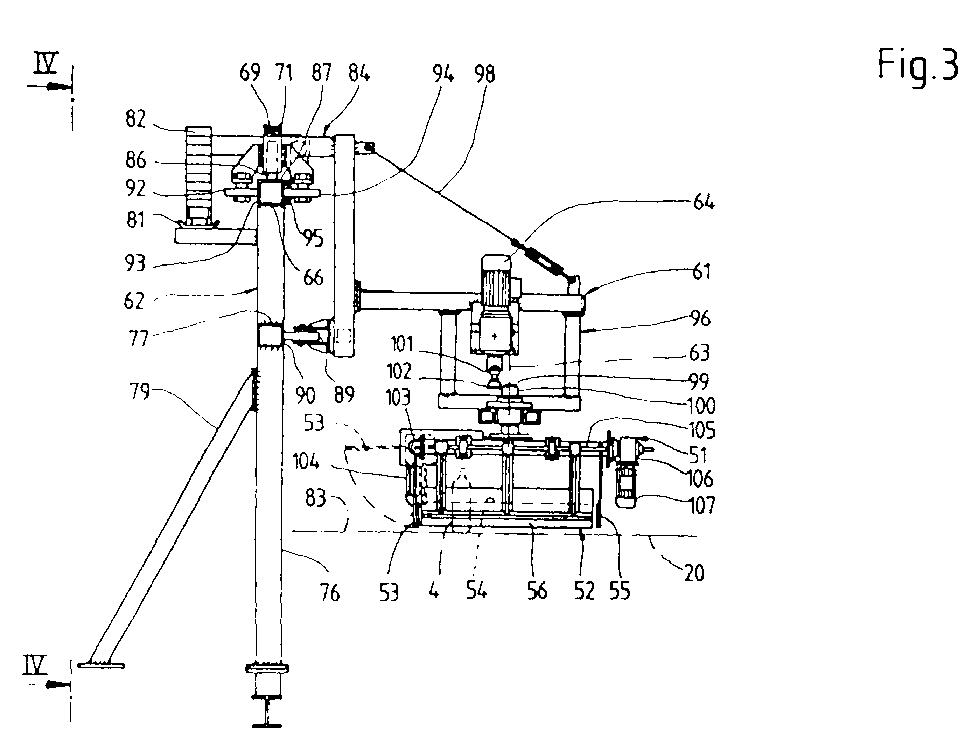

In den Fig. 3 bis 5 sind Einzelheiten der Wagenbahn 62, des Wagens 61 und der Schiebevorrichtung 51 dargestellt.

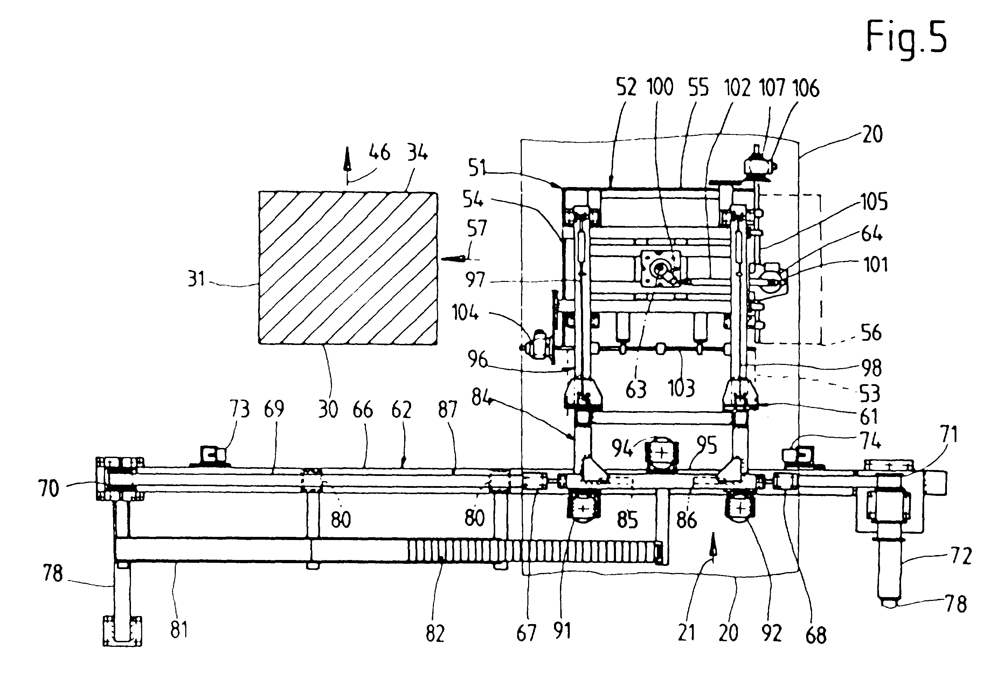

Die Wagenbahn 62 weist einen waagerechten Träger 66 auf, an dem der Wagen 61 in und entgegengesetzt zu der Richtung des Pfeils 57 verfahrbar ist.
An Anschlußpunkten 67 und 68 des Wagens 61 sind die Enden eines Zahnriemens 69 befestigt. Der Zahnriemen 69 ist über an dem Träger 66 gelagerte Umlenkrollen 70 und 71 geführt. Die Umlenkrolle 71 ist durch einen Elektro-Servomotor 72 (Fig. 5) in beiden Drehrichtungen antreibbar.

Zur Begrenzung der Fahrbewegung des Wagens 61 sind an dem Träger 66 Stopper 73 und 74 montiert. Der Träger 66 ruht auf Säulen 75 und 76, die durch eine Traverse 77 miteinander verbunden und durch seitliche Streben 78 und 79 abgestützt sind. Senkrechte Stützen 80 zwischen der Traverse 77 und dem Träger 66 dienen der Versteifung des Gestells und tragen eine Ablagebahn 81 für einen an dem Wagen 61 angeschlossenen flexiblen Kabelkanal 82.

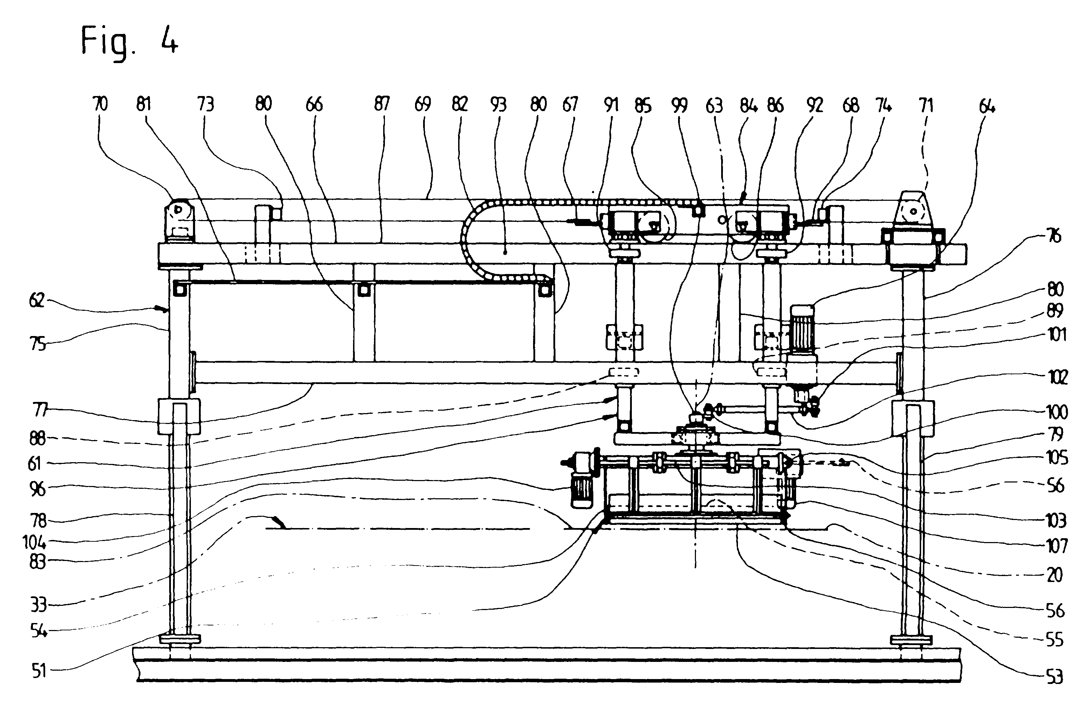

Eine obere Fläche des Lagentransportbandes 20 definiert eine Schiebeebene 83, die in den Fig. 3 und 4 strichpunktiert eingezeichnet ist. In Fig. 4 ist durch eine strichpunktierte Linie außerdem die seitliche Lage der Palettierstation 33 relativ zu dem Lagentransportband 20 angegeben. Die Schiebevorrichtung 51 befindet sich in einem verhältnismäßig geringen Abstand oberhalb der Schiebeebene 83.

Der Wagen 61 weist einen Rahmen 84 auf, an dem in einem Abstand voneinander Laufrollen 85 und 86 gelagert sind, die auf einer oberen Laufbahn 87 des Trägers 66 abrollen. Der Rahmen 84 trägt weiter unten im Abstand voneinander Stützrollen 88 und 89, die an einer seitlichen Laufbahn 90 der Traverse 77 abrollen. Schließlich sind an dem Rahmen 84 auf der von der Schiebevorrichtung 51 abgewandten Seite der Wagenbahn 62 im Abstand voneinander Führungsrollen 91 und 92 gelagert. Die Führungsrollen 91, 92 laufen auf einer seitlichen Laufbahn 93 des Trägers 66. Zwischen den Führungsrollen 91, 92 ist an dem Rahmen 84 auf der gegenüberliegenden Seite des Trägers 66 eine Führungsrolle 94 gelagert, die an einer seitlichen Laufbahn 95 des Trägers 66 abrollt.

An dem Rahmen 84 des Wagens 61 ist in Fig. 3 nach rechts hin ein Ausleger 96 montiert, der zusätzlich durch Spannseile 97 und 98 gehalten ist.

An dem Ausleger 96 ist eine mit der senkrechten Achse 63 konzentrische Welle 99 drehend antreibbar gelagert. An der Welle 99 sind unten die Schiebevorrichtung 51 und oben eine Kurbel 100 befestigt. Der Elektro-Servoantrieb 64 ist ebenfalls an dem Ausleger 96 montiert und weist eine Abtriebskurbel 101 auf, die mit der Kurbel 100 durch eine Koppelstange 102 gelenkig verbunden ist.

Bei dem in den Fig. 3 bis 5 gezeichneten Ausführungsbeispiel der Schiebevorrichtung 51 sind die Seitenwände 53 und 56 bewegbar ausgebildet. Die Seitenwand 53 hängt an einer waagerechten Welle 103, die durch einen Elektro-Servoantrieb 104 über ein Winkelgetriebe hin und her drehend antreibbar ist. Fig. 3 zeigt die herabhängende, geschlossene Stellung der Seitenwand 53 und gestrichelt die um 90 ° hochgeschwenkte, geöffnete Stellung, in der die Seitenwand 53 sich oberhalb der Glasbehälter 4 befindet.

In ähnlicher Weise ist die Seitenwand 56 an einer waagerechten Welle 105 befestigt, die über ein Winkelgetriebe 106 durch einen Elektro-Servoantrieb 107 der Schiebevorrichtung 51 hin und her drehend antreibbar ist.

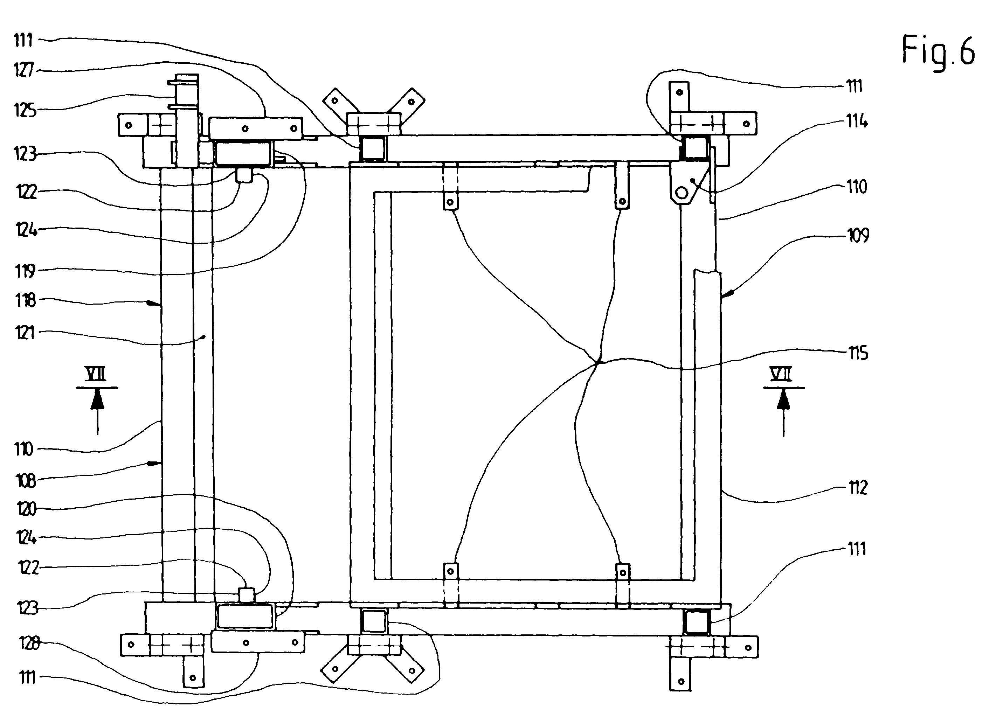

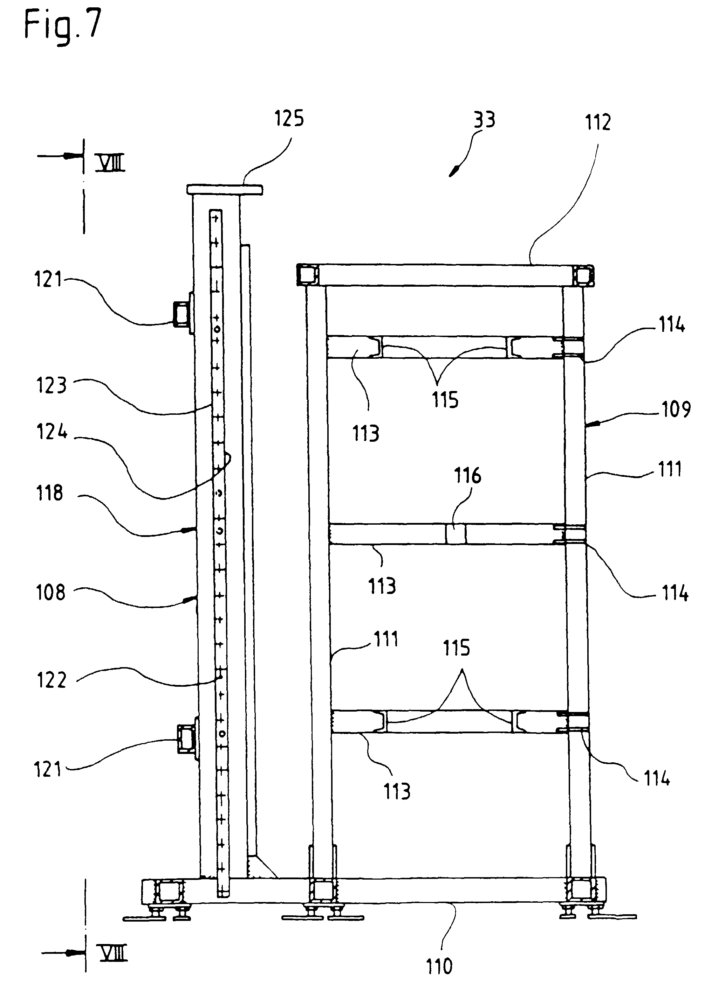

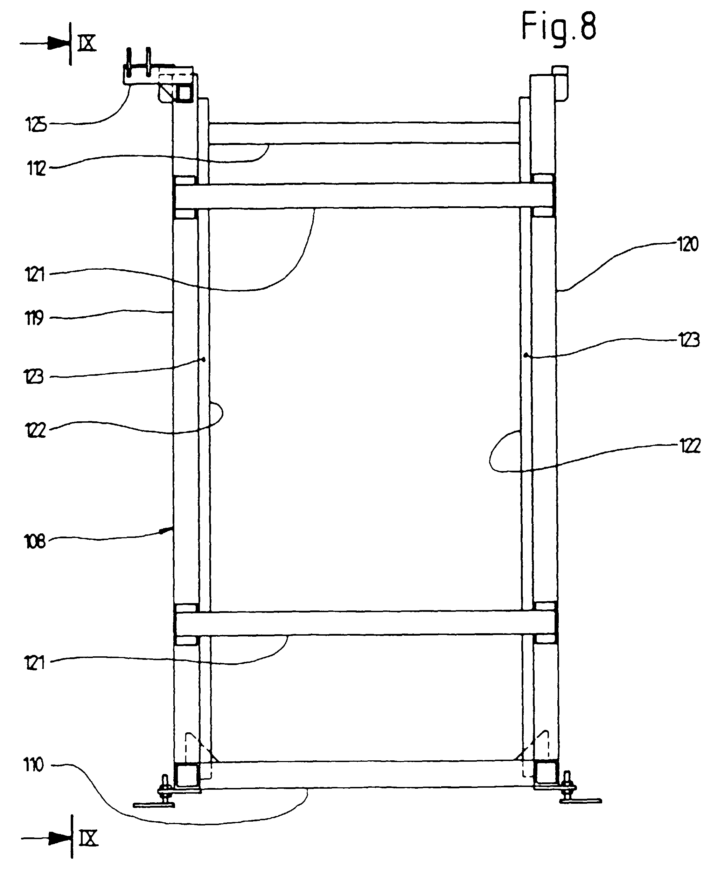

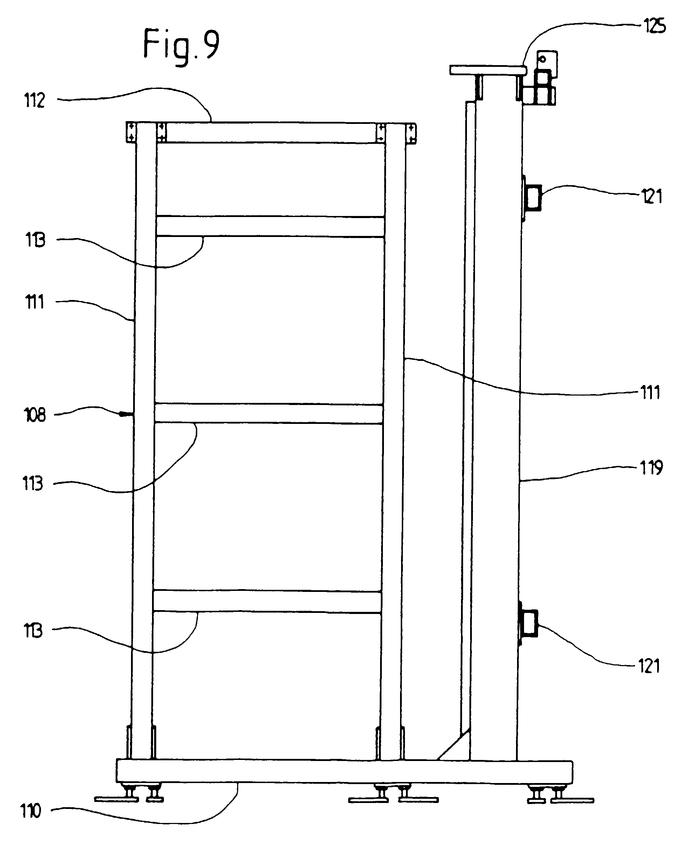

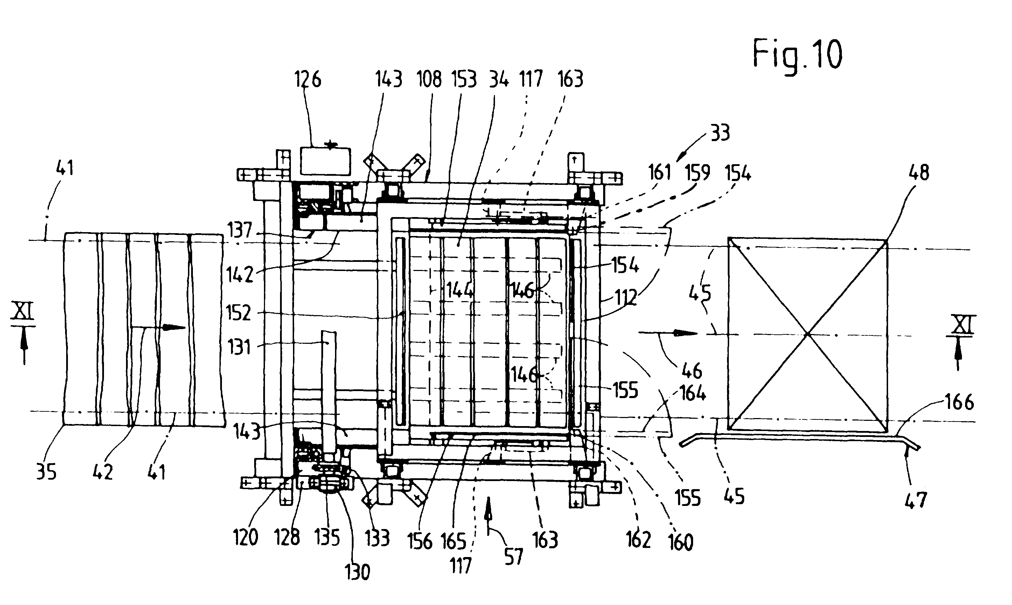

Die Fig. 6 bis 9 zeigen jeweils unterschiedliche Ansichten eines Grundgestells 108 der Palettierstation 33. Das Grundgestell 108 weist einen Turm 109 von im wesentlichen rechteckiger Querschnittsfläche auf. Der Turm 109 ist im wesentlichen aus einem Grundrahmen 110 gebildet, an dessen vier Ecken sich jeweils ein Ständer 111 erhebt. An die Ständer 111 ist oben ein umlaufender Ring 112 angeschraubt. Zwischen die Ständer 111 geschweißte Traversen 113 erhöhen die Stabilität des Turms 109. Auf der Höhe der Traversen 113 sind an die in den Fig. 6 und 7 rechts angeordneten beiden Ständer 111 jeweils drei Lagerböcke 114 angeschweißt. An den Schmalseiten des Turms 109 tragen die oberste und die unterste Traverse 113 jeweils zwei Stützen 115, die sich in einer waagerechten Ebene zum Inneren des Turms 109 hin erstrecken. Die dazwischen liegenden mittleren Traversen 113 tragen jeweils eine Anschlußfläche 116 für einen Lagerbock 117 (Fig. 10).

In den Fig. 6 und 7 ist der Grundrahmen 110 nach links fortgesetzt und trägt in seitlichem Abstand von dem Turm 109 eine senkrechte Wagenbahn 118. Die Wagenbahn 118 weist zwei Standrohre 119 und 120 von rechteckiger Querschnittsfläche auf, die unten jeweils mit dem Grundrahmen 110 verschweißt sind. Traversen 121 erhöhen die Steifigkeit der Wagenbahn 118. An jedem Standrohr 119, 120 ist an der einander zugewandten Seite eine Laufschiene 122 mit gegenüberliegenden Laufbahnen 123 und 124 befestigt. Das Standrohr 119 trägt oben eine Konsole 125 zur Aufnahme eines Elektro-Servoantriebs 126 (Fig. 10) und eine Aufnahmeplatte 127. Eine gleichartige Aufnahmeplatte 128 ist oben an dem Standrohr 120 befestigt.

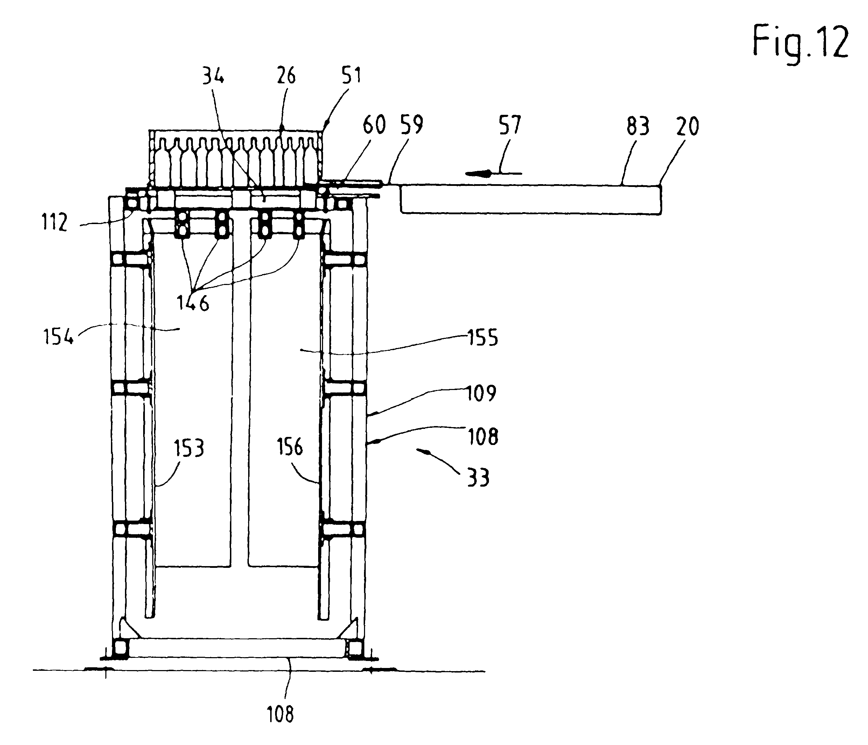

In den Fig. 10 bis 12 sind weitere Einzelheiten der Palettierstation 33 dargestellt.

Aus den Fig. 10 und 11 ist zu entnehmen, daß auf den Aufnahmeplatten 127, 128 jeweils ein Lagerbock 129 und 130 für eine waagerechte Welle 131 befestigt ist. An der Welle 131 sind, jeweils in Fluchtung mit den Standrohren 119, 120, Kettenräder 132 und 133 befestigt, über die jeweils eine Kette 134 und 135 läuft. Das eine Ende jeder Kette 134, 135 ist an einem Anschlußpunkt 136 eines Wagens 137 befestigt, während das andere Ende an einem im Inneren der Standrohre 119, 120 heb- und senkbaren Gegengewicht 138 (Fig. 11) festgemacht ist. Der Wagen 137 läuft mit je einer Laufrolle 139 auf den beiden Laufbahnen 124 und mit je zwei Laufrollen 140 und 141 auf den beiden Laufbahnen 123. Der Wagen 137 weist einen sich zu dem Turm 109 hin erstreckenden Ausleger 142 auf. Der Ausleger 142 hat an einer Innenseite jedes Standrohrs 119, 120 einen waagerechten Holm 143, der sich bis zu einem Anfang einer Außenseite des Turms 109 erstreckt. Dort sind die freien Enden der beiden Holme 143 durch eine waagerechte Traverse 144 miteinander verschweißt. Die Traverse 144 erstreckt sich durch den Innenraum des Turms 109 und trägt eine Tragvorrichtung 145 für die Palette 34. Die Tragvorrichtung 145 weist vier in seitlichem Abstand voneinander und parallel zu dem Pfeil 46 angeordnete Arme 146 (Fig. 10) auf, die mit der Traverse 144 verschweißt sind. Die Arme 146 erstrecken sich über die gesamte Breite der Palette 34 und sind in seitlicher Richtung so angeordnet, daß sie sich, wie Fig. 10 zeigt, seitlich neben den Förderketten 45 befinden.

Beim Absenken des Wagens 137 erreicht die Palette 34 schließlich die in Fig. 11 strichpunktiert angedeutete unterste Stellung, in der die Palette 34 auf den Förderketten 45 abgesetzt wird. Dabei tauchen die Arme 146 durch die Förderketten 45 hindurch nach unten und lösen sich von der Palette 34. Die voll beladene Palette 34 wird sodann in Richtung des Pfeils 46 durch die Förderketten 45 aus dem Turm 109 herausgefördert. Dann kann die nächste leere Palette 35 durch das Längsfördermittel 41 in Richtung des Pfeils 42 auf die Förderketten 45 in dem Turm 109 gefördert werden. Danach wird der Wagen 137 wieder nach oben gefahren und legt sich mit seinen Armen 146 unter die neue, leere Palette, die dann in die in Fig. 11 oben gezeichnete Stellung angehoben wird. In dieser Stellung ist die Palette 34 zur Aufnahme der ersten formatierten Lage 26 bereit.

Der Randbereich 60 des Stützelements 58 (Fig. 1) wird über den Anfang der Palette 34 geschoben und gleitet dabei in seitlichen Führungsschienen 147 und 148, die oben auf dem Ring 112 des Turms 109 aufliegen. Sodann wird die Palette 34 behutsam etwas angehoben, bis sie in Berührung mit der Unterseite des Randbereichs 60 gelangt. Danach wird die formatierte Lage 26 durch die Schiebevorrichtung 51 über die Palette 34 geschoben und der Randbereich 60 außer Berührung mit der formatierten Lage 26 und der Palette 34 zurückgezogen. Die Palette 34 mit der darauf stehenden formatierten Lage 26 wird durch den Wagen 37 um eine Höhenteilung abgesenkt, und die Schiebevorrichtung 51 wird in ihre Ausgangslage zurückgefahren.

Innerhalb des Rings 112 weist der Turm 109 gleich unterhalb der Schiebeebene 83 einen Zentrierrahmen 149 auf. Der Zentrierrahmen 149 besteht aus vier gesondert waagerecht bewegbaren Seitenwänden 150. Mit den Seitenwänden 150 läßt sich zunächst die Palette 34 und nachfolgend jede formatierte Lage 26 auf eine Mittenlängsachse 151 des Turms 109 zentrieren.

Unterhalb des Zentrierrahmens 149 ist der Turm 109 allseitig mit Führungsplatten 152 bis 156 zum seitlichen Führen der Palette 34 und der Lagen 26 auf der Palette 34 versehen. Die Führungsplatte 152 ist über Halter 157 und 158 an der Wagenbahn 118 befestigt. Die Führungsplatten 153 und 156 sind jeweils an den Stützen 115 (Fig. 6 und 7) montiert. Die Führungsplatten 154 und 155 sind jeweils als Türflügel ausgebildet, die um eine senkrechte Achse 159 und 160 schwenkbar an den Lagerböcken 114 gelagert sind. Jede der Führungsplatten 154 und 155 ist mit einem rückwärtigen Fortsatz 161 und 162 versehen. Zwischen dem freien Ende der Fortsätze 161, 162 und dem zugehörigen Lagerbock 117 ist jeweils eine Kolben-Zylinder-Einheit 163 angeschlossen. Eine Betätigung der Kolben-Zylinder-Einheiten 163 hat ein Schwenken der Führungsplatten 154 und 155 zwischen der in Fig. 10 voll ausgezogen dargestellten geschlossenen Stellung und der strichpunktiert dargestellten Offenstellung zur Folge. In der Offenstellung kann die beladene Palette 48 aus der Palettierstation 33 in Richtung des Pfeils 46 herausgefördert werden.

Im aufgeschwenkten Zustand fluchtet eine Innenfläche 164 der Führungsplatte 155 zumindest annähernd mit einer Innenfläche 165 der Führungsplatte 156 der benachbarten Seite des Turms 109. Gleichzeitig fluchtet die Innenfläche 164 zumindest annähernd mit einer Innenfläche 166 der Heftstation 47.

Auf der in den Fig. 10 und 11 linken Seite sind die Führungsplatten 153, 156 nicht ganz an die Ebene der Führungsplatte 152 herangeführt. Vielmehr besteht jeweils ein Spalt 167, der die ungehinderte Vertikalbewegung der Traverse 144 gestattet. Die Führungsplatte 152 endet in einem Abstand 168 oberhalb des Längsfördermittels 41, um die leeren Paletten 35 ungehindert in den Turm 109 einzulassen.

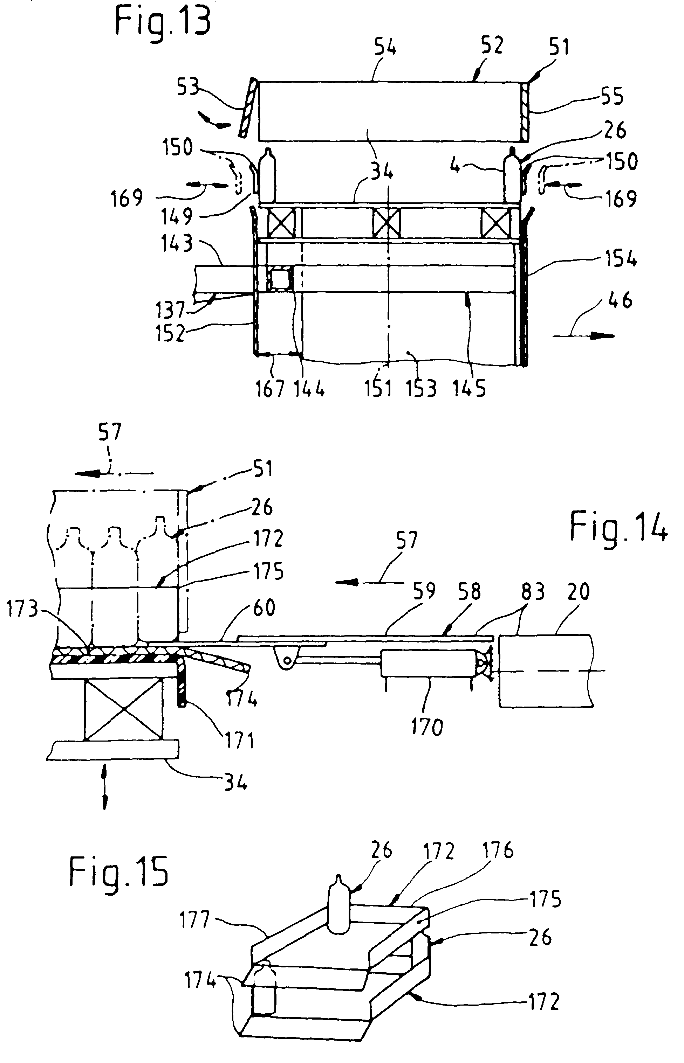

Gemäß Fig. 13 ist die Seitenwand 53 des Rahmens 52 etwas hochgeschwenkt worden, bevor die Palette 34 mit der darauf stehenden formatierten Lage 26 um eine Höhenteilung abgesenkt wurde. In der gleichen, in Fig. 13 nicht dargestellten Weise kann die angrenzende Seitenwand 56 (Fig. 3) leicht hochgeschwenkt werden. Durch dieses Hochschwenken wird der seitliche Druck des Rahmens 52 auf die formatierte Lage 26 aufgehoben, so daß sich die Lage 26 beim Absenken der Palette 34 störungsfrei von dem Rahmen 52 lösen kann.

Fig. 13 zeigt auch, wie die Seitenwände 150 des Zentrierrahmens 149 in den Richtungen von Doppelpfeilen 169 zwischen einer strichpunktierten Ausgangsstellung und einer mit vollausgezogenen Linien dargestellten Zentrierstellung bewegbar sind. In der Zentrierstellung legen sich die Seitenwände 150 an die formatierte Lage 26 an und zentrieren diese auf die Mittenlängsachse 151. Sodann werden die Seitenwände 150 wieder in ihre strichpunktierte Ausgangslage zurückgefahren. Auf die gleiche Weise wird anfänglich die Palette 34 auf die Mittenlängsachse 151 zentriert.

In Fig. 14 ist erkennbar, daß der Randbereich 60 des Stützelements 58 durch eine Kolben-Zylinder-Einheit 170 in Richtung des Pfeils 57 und zurück bewegbar ist. Auf die Palette 34 ist in an sich bekannter Weise zunächst eine Polyethylen-Folie 171 gelegt. Auf der Folie 171 ist dann ein Boden 172 einer sogenannten Bodenverpackung mit einem Bodenteil 173 aufgesetzt. Eine dem Lagentransportband 20 zugewandte Seitenwand 174 des Bodens 172 ist heruntergeklappt. Auf diese Weise kann sich der Randbereich 60, wenn er in Richtung des Pfeils 57 vorgeschoben wird, über die heruntergeklappte Seitenwand 174 hinweg über den Bodenteil 173 bewegen. Dabei fährt der Randbereich 60 zwischen die hochstehenden Seitenwände 175 und 177 (Fig. 15) des Bodens 172, der außerdem eine rückwärtige hochstehende Seitenwand 176 (Fig. 15) aufweist.

Normalerweise befindet sich beim Vorschieben des Randbereichs 60 in die in Fig. 14 gezeichnete Stellung ein gewisser vertikaler Abstand zwischen dem Randbereich 60 und dem Bodenteil 173. Erst wenn der Randbereich 60 seine in Fig. 14 gezeichnete Endstellung erreicht hat, wird die Palette 34 so weit hochgefahren, daß gerade eine Berührung zwischen dem Bodenteil 173 und dem Randbereich 60 stattfindet. Sodann wird die formatierte Lage 26 mit der Schiebevorrichtung 51 über das Stützelement 58 auf den Bodenteil 173 geschoben. Wenn dies abgeschlossen ist, wird der Randbereich 60 zurückgezogen, die Palette 34 um eine Höhenteilung abgesenkt und die Schiebevorrichtung 51 in ihre Ausgangslage zurückgefahren. Beim Absenken trifft die heruntergeklappte Seitenwand 174 auf die zugehörige Seitenwand 150 des Zentrierrahmens 149 und danach auch auf die Führungsplatte 156. Dadurch wird die zunächst heruntergeklappte Seitenwand 174 hochgeklappt und verbleibt dank der fortdauernden seitlichen Führung durch die Führungswand 156 in dieser hochgeklappten Stellung. Wenn schließlich die beladene Palette 34 in Richtung des Pfeils 46 (Fig. 10) aus dem Turm 109 heraustransportiert wird, werden die hochgeklappten Seitenwände 174 durch die Innenfläche 164 der aufgeschwenkten Führungsplatte 155 und die Innenfläche 166 der Heftstation 47 hochgehalten, bis in der Heftstation 47, z.B. durch Heftklammern oder Heißschmelzkleber, die Seitenwände 174 an den angrenzenden Seitenwänden 175, 177 befestigt sind.

Fig. 15 zeigt das Prinzip der Bodenverpackung. Auf die gemäß Fig. 14 übergeschobene formatierte Lage 26 wird wiederum ein nach oben offener Boden 172 mit heruntergeklappter Seitenwand 174 aufgesetzt, und der Überschiebezyklus kann von neuem beginnen.

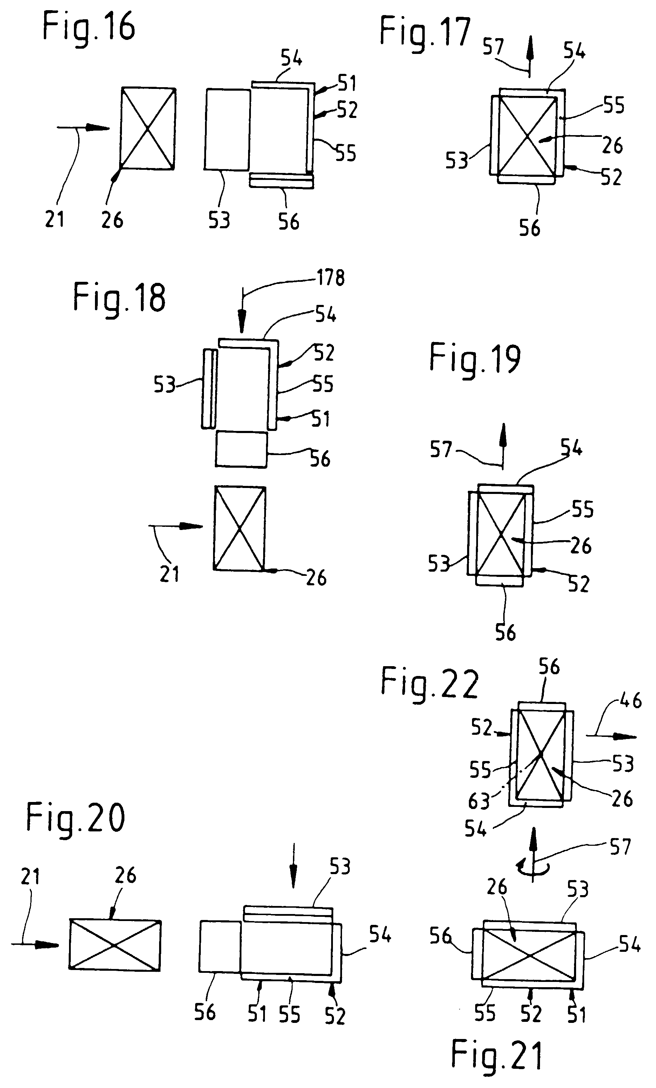

Gemäß Fig. 16 sind die Seitenwand 53 des Rahmens 52 ganz hochgeschwenkt und die Seitenwand 56 nur wenig hochgeschwenkt, wenn die formatierte Lage 26 in der zweiten Transportrichtung 21 angeliefert wird. Das leichte Hochschwenken der Seitenwand 56 erleichtert das Einlaufen der Lage 26 in den Rahmen 52. Sobald sich die Lage 26 in dem Rahmen 52 befindet, werden die Seitenwände 53, 56 heruntergeklappt. Dadurch wird die Lage 26 unter allseitigem leichten Druck in dem Rahmen 52 festgelegt. Dieser Zustand ist in Fig. 17 dargestellt. In diesem Zustand kann das Überschieben in Richtung des Pfeils 57 beginnen. Die Seitenwände 54, 55 des Rahmens 52 bleiben stets in der gleichen Position relativ zueinander und sind nicht heb- und senkbar.

Fig. 18 verdeutlicht eine andere Betriebsweise. Hier ist die formatierte Lage 26 in der zweiten Transportrichtung 21 schon in eine Übernahmeposition transportiert worden. Der Rahmen 52 wird in Richtung eines Pfeils 178 bewegt, bis er die formatierte Lage 26 umschlossen hat. Dazu sind die Seitenwand 56 ganz angehoben und die Seitenwand 53 nur leicht angehoben, um die Aufnahme der formatierten Lage 26 zu erleichtern. Sobald diese Aufnahme abgeschlossen ist, werden die Seitenwände 53, 56 heruntergeklappt. Dieser Zustand ist in Fig. 19 dargestellt und beschreibt den Beginn des Überschiebens in Richtung des Pfeils 57.

Eine wiederum andere Betriebsweise ergibt sich aus Fig. 20 bis 22.

In Fig. 20 befindet sich der Rahmen 52 schon in Aufnahmeposition, wobei die Seitenwand 56 ganz hochgeklappt und die Seitenwand 53 nur etwas hochgeklappt sind. Die formatierte Lage 26 wird mit ihrer Breitseite voraus in der zweiten Transportrichtung 21 gefördert, bis sie in den Rahmen 52 eingelaufen ist. Sodann werden die Seitenwände 53, 56 heruntergeklappt und dadurch die formatierte Lage 26 in dem Rahmen 52 fixiert. Dieser Zustand ist in Fig. 21 dargestellt. Es folgt das Überschieben in Richtung des Pfeils 57, in diesem Fall jedoch zusätzlich ein Schwenken der Schiebevorrichtung 51 um die senkrechte Achse 63 um 90 . Auf diese Weise zeigt schließlich gemäß Fig. 22 in dem Turm 109 (Fig. 10) eine Längsseite der formatierten Lage 26 in Richtung des Pfeils 46.

## Patentansprüche

1. Vorrichtung (32) zum Tansportieren einer zuvor formatierten Lage (26) von stehend angeordneten Glasbehältern (4) von einer Unterlage (20) über eine in einer Palettierstation (33) angeordnete Palette (34),
wobei die auf der Unterlage (20) stehende Lage (26) durch eine Schiebevorrichtung (51) in einer Schiebeebene (83) von der Unterlage (20) weg über die Palette (34) schiebbar ist,
wobei die Palette (34) zur Aufnahme einer nächsten Lage (26) um eine Höhenteilung unter die Schiebeebene (83) absenkbar ist,
wobei die Schiebevorrichtung (51) in ihre Ausgangsposition zur Übernahme der nächsten Lage (26) zurückbewegbar ist,
wobei die Palette (34) nach voller Beladung mit den Lagen (26) aus der Palettierstation (33) entfernbar ist,
und wobei eine nachfolgende leere Palette (35) in der Palettierstation (33) und mit einer oberen Ladefläche in der Schiebeebene (83) positionierbar ist,
dadurch gekennzeichnet, daß die Schiebevorrichtung (51) einen rechteckigen Rahmen (52) mit vier Seitenwänden (53 bis 56) aufweist,
daß ein erster Abstand zwischen zwei gegenüberliegenden (53,55) der Seitenwände (53 bis 56) gleich einer Breite (31) der Lage (26) ist,
daß ein zweiter Abstand zwischen den beiden anderen Seitenwänden (54,56) gleich einer Länge (30) der Lage (26) ist,
und daß die auf der Unterlage (20) stehende Lage (26) in dem Rahmen (52) aufnehmbar ist.

2. Vorrichtung nach Anspruch 1,
dadurch gekennzeichnet, daß die Unterlage als Lagentransportband (20) ausgebildet ist,
daß sich die Schiebevorrichtung (51) in ihrer Ausgangsposition oberhalb des Lagentransportbandes (20) befindet,
und daß der aufzunehmenden Lage (26) eine bewegbare Seitenwand (53;56) der Schiebevorrichtung (51) zugewandt ist, wobei die bewegbare Seitenwand (53;56) zur Aufnahme der Lage (26) aus dem Weg der Lage (26) bewegbar und nach der Aufnahme der Lage (26) wieder in ihre den Rahmen (52) schließende Position zurückbewegbar ist.

3. Vorrichtung nach Anspruch 2,
dadurch gekennzeichnet, daß der Rahmen (52) zwei aneinander angrenzende, wahlweise aus dem Weg der Lage (26) und wieder zurück bewegbare Seitenwände (53,56) aufweist.

4. Vorrichtung nach Anspruch 2 oder 3,
dadurch gekennzeichnet, daß jede bewegbare Seitenwand (53;56) um eine waagerechte Achse (103;105) heb- und senkbar ist.

5. Vorrichtung nach einem der Ansprüche 1 bis 4,
dadurch gekennzeichnet, daß die Schiebevorrichtung (51) um eine senkrechte Achse (63) schwenkbar ist.

6. Vorrichtung nach einem der Ansprüche 1 bis 5,
dadurch gekennzeichnet, daß in einem Bewegungsbereich der Schiebevorrichtung (51) eine stationäre Wagenbahn (62) angeordnet ist,
daß an der Wagenbahn (62) ein Wagen (61) verfahrbar gehalten ist,
und daß an dem Wagen (61) die Schiebevorrichtung (51) angeordnet ist.

7. Vorrichtung nach Anspruch 6,
dadurch gekennzeichnet, daß an dem Wagen (61) ein flexibles Antriebsorgan (69) befestigt ist,
daß das Antriebsorgan (69) über Umlenkrollen (70,71) an Enden der Wagenbahn (62) geführt ist,
und daß wenigstens eine (71) der Umlenkrollen (70,71) drehend antreibbar (72) ist.

8. Vorrichtung nach Anspruch 6 oder 7,
dadurch gekennzeichnet, daß der Wagen (61) einen mit Rollen (85,86,88,89,91,92,93) an Laufbahnen (87,90, 93,95) der Wagenbahn (62) abrollenden Rahmen (84) aufweist,
und daß an dem Rahmen (84) ein die Schiebevorrichtung (51) tragender Ausleger (96) montiert ist.

9. Vorrichtung nach einem der Ansprüche 6 bis 8,
dadurch gekennzeichnet, daß an dem Wagen (61) eine mit der senkrechten Achse (63) konzentrische Welle (99) drehend antreibbar gelagert ist,
und daß an der Welle (99) die Schiebevorrichtung (51) montiert ist.

10. Vorrichtung nach Anspruch 9,
dadurch gekennzeichnet, daß an der Welle (99) eine Kurbel (100) befestigt ist,
daß an dem Wagen (61) ein eine Antriebskurbel (101) aufweisender Elektro-Servoantrieb (64) montiert ist,
und daß die Antriebskurbel (101) und die Kurbel (100) durch eine Koppelstange (102) miteinander gelenkig verbunden sind.

11. Vorrichtung nach einem der Ansprüche 1 bis 10,
dadurch gekennzeichnet, daß zwischen der Unterlage (20) und der oberen Ladefläche der zu beladenden Palette (34) ein Stützelement (58) angeordnet ist,
daß jede Lage (26) durch die Schiebevorrichtung (51) über das Stützelement (58) hinweg auf die obere Ladefläche schiebbar ist,
daß zumindest ein der Palette (34) zugewandter Randbereich (60) des Stützelements (58) verhältnismäßig geringe Dicke aufweist,
und daß der Randbereich (60) vor dem Überschieben der Lage (26) in Überlappung mit der oberen Ladefläche und nach dem Überschieben wieder zurück in eine Ausgangsposition bewegbar ist.

12. Vorrichtung nach Anspruch 11,
dadurch gekennzeichnet, daß bei einer sogenannten Bodenverpackung, bei der unter der untersten Lage (26) und jeweils zwischen aufeinanderfolgende Lagen (26) auf der Palette (34) ein Boden (172) mit einem rechteckigen Bodenteil (173) und vier, sich nach oben erstreckenden Seitenwänden (174 bis 177) eingebracht ist, eine der überzuschiebenden Lage (26) zugewandte Seitenwand (174) jedes Bodens (172) zumindest bis in die Waagerechte heruntergeklappt ist,
und daß vor dem Überschieben der Lage (26) der Randbereich (60) des Stützelements (58) über die heruntergeklappte Seitenwand (174) hinweg in Überlappung mit dem die obere Ladefläche definierenden Bodenteil (173) bewegbar ist.

13. Vorrichtung nach einem der Ansprüche 1 bis 12,
dadurch gekennzeichnet, daß die Palettierstation (33) einen Turm (109) aufweist,
daß die Schiebeebene (83) oberhalb eines offenen oberen Endes des Turms (109) angeordnet ist,
daß die leere Palette (35) auf eine in einer Tiefststellung befindliche Tragvorrichtung (145) in dem Turm (109) förderbar ist,
daß die leere Palette (34) durch die Tragvorrichtung (145) in dem Turm (109) mit ihrer oberen Ladefläche im wesentlichen bis in die Schiebeebene (83) hebbar ist,
und daß die Palette (34) durch die Tragvorrichtung (145) schrittweise bis in eine Entnahmeebene für die voll beladene Palette (34) senkbar ist.

14. Vorrichtung nach Anspruch 13,
dadurch gekennzeichnet, daß die voll beladene Palette (34) in der Entnahmeebene auf mehrere, im Abstand voneinander angeordnete Förderketten (45) absetzbar ist.

15. Vorrichtung nach Anspruch 13 oder 14,
dadurch gekennzeichnet, daß die Tragvorrichtung (145) über einen sich seitlich aus dem Turm (109) heraus erstreckenden Ausleger (142) an einem Wagen (137) befestigt ist,
und daß der Wagen (137) an einer neben dem Turm (109) angeordneten, senkrechten Wagenbahn (118) durch einen Antrieb (126) verfahrbar ist.

16. Vorrichtung nach einem der Ansprüche 13 bis 15,
dadurch gekennzeichnet, daß der Turm (109) gleich unterhalb der Schiebeebene (83) einen die leere Palette (34) und jede Lage (26) bei deren Absenken zentrierenden Zentrierrahmen (149) aufweist.

17. Vorrichtung nach einem der Ansprüche 13 bis 16,
dadurch gekennzeichnet, daß der Turm (109) allseitig mit Führungsplatten (152 bis 156) zum seitlichen Führen der Palette (34) und der Lagen (26) auf der Palette (34) und zum selbsttätigen Hochklappen oder Hochhalten der zunächst heruntergeklappten Seitenwand (174) der Böden (172) der Bodenverpackung versehen ist.

18. Vorrichtung nach Anspruch 17,
dadurch gekennzeichnet, daß an einer die beladene Palette (34) aus dem Turm (109) entlassenden Seite des Turms (109) wenigstens eine, um eine senkrechte Achse (159;160) schwenkbare Führungsplatte (154;155) als Türflügel vorgesehen ist,
und daß eine Innenfläche (164) wenigstens eines Türflügels (155) im aufgeschwenkten Zustand zumindest annähernd mit einer Innenfläche (165) einer Führungsplatte (156) der benachbarten Seite des Turms (109) fluchtet.

19. Vorrichtung nach Anspruch 18,
dadurch gekennzeichnet, daß gleich nach dem wenigstens einen aufgeschwenkten Türflügel (155) eine Heftstation (47) angeordnet ist,
daß die Heftstation (47) Führungselemente aufweist, deren der beladenen Palette (48) zugewandte Innenfläche (166) mit der Innenfläche (164) des aufgeschwenkten Türflügels (155) fluchtet,
und daß in der Heftstation (47) die weiterhin hochgeklappte Seitenwand (174) jedes Bodens (172) der Bodenverpackung an die angrenzenden Seitenwände (175,177) des Bodens (172) heftbar ist.

## Claims

1. Device (32) for the purpose of transporting a previously formatted layer (26) of vertically disposed glass containers (4) from a base (20) by way of a pallet (34), which is disposed in a palletizing station (33),
wherein the layer (26) positioned on the base (20) can be displaced by virtue of a displacement device (51) in a plane of displacement (83) away from the base (20) by way of the pallet (34),
wherein for the purpose of receiving a next layer (26) the pallet (34) can be lowered below the plane of displacement (83) by a height division,
wherein the displacement device (51) can be moved back to its starting position for the purpose of handling the next layer (26),
wherein the pallet (34) can be removed from the palletizing station (33) after being fully loaded with the layers (26),
and wherein a successive empty pallet (35) can be positioned in the palletization station (33) and can be positioned with an upper loading surface in the plane of displacement (83),
characterised in that the displacement device (51) comprises a rectangular frame (52) having four lateral walls (53 to 56),
that a first spaced interval between two opposite-lying lateral walls (53, 55) of the lateral walls (53 to 56) is equal to the width (31) of the layer (26),
that a second spaced interval between the two other lateral walls (54, 56) is equal to the length (30) of the layer (26),
and that the layer (26) which is positioned on the base (20) can be received in the frame (52).

2. Device according to claim 1,
characterised in that the base is formed as a layer transporting belt (20),
that the displacement device (51) is located in its starting position above the layer transporting belt (20),
and that facing the layer (26) which is to be received is a movable lateral wall (53; 56) of the displacement device (51), wherein the movable lateral wall (53; 56) can be moved out of the path of the layer (26) for the purpose of receiving the layer (26) and can be moved back into its position, which closes the frame (52), after the layer (26) has been received.

3. Device according to claim 2,
characterised in that the frame (52) comprises two adjacent lateral walls (53, 56) which can be moved optionally out of the path of the layer (26) and back again.

4. Device according to claim 2 or 3,
characterised in that each movable lateral wall (53; 56) can be lifted and lowered about a horizontal axis (103; 105).

5. Device according to any one of the claims 1 to 4,
characterised in that the displacement device (51) can be pivoted about a vertical axis (63).

6. Device according to any one of the claims 1 to 5,
characterised in that a stationary carriage track (62) is disposed in a region of movement of the displacement device (51),
that a carriage (61) is held so as to be movable on the carriage track (62),
and that the displacement device (51) is disposed on the carriage (61).

7. Device according to claim 6,
characterised in that a flexible drive element (69) is attached to the carriage (61),
that the drive element (69) is guided by way of deflecting rollers (70, 71) on ends of the carriage track (62),
and that at least one (71) of the deflecting rollers (70, 71) can be driven in a rotational manner (72).

8. Device according to claim 6 or 7,
characterised in that the carriage (61) comprises a frame (84) which rolls by means of rollers (85, 86, 88, 89, 91, 92, 93) on running tracks (87, 90, 93, 95) of the carriage track (62),
and that an extension arm (96) which supports the displacement device (51) is mounted on the frame (84).

9. Device according to any one of the claims 6 to 8,
characterised in that a shaft (99) which is concentric with the vertical axis (63) is mounted on the carriage (61) such that said shaft can be driven in a rotational manner,
and that the displacement device (51) is mounted on the shaft (99).

10. Device according to claim 9,
characterised in that a crank (100) is attached to the shaft (99),
that an electro-servo drive (64) which comprises a drive crank (101) is mounted on the carriage (61),
and that the drive crank (101) and the crank (100) are mutually connected in an articulated manner by virtue of a coupling rod (102).

11. Device according to any one of the claims 1 to 10,
characterised in that a supporting element (58) is disposed between the base (20) and the upper loading surface of the pallet (34) which is to be loaded,
that each layer (26) can be displaced by virtue of the displacement device (51) over the supporting element (58) on to the upper loading surface,
that at least one edge region (60), facing the pallet (34), of the supporting element (58) comprises a relatively narrow thickness,
and that prior to the layer (26) being thus displaced the edge region (60) can be moved so as to overlap with the upper loading surface and after said layer has been displaced the said edge region can be moved back to its starting position.

12. Device according to claim 11,
characterised in that in the case of a so-called base packing, in which below the lowest layer (26) and in each case between successive layers (26) on the pallet (34) a base (172) is inserted having a rectangular base part (173) and four lateral walls (174 to 177) which extend upwards, a lateral wall (174) of each base (172), facing the layer (26) to be thus displaced, is folded downwards at least as far as the horizontal position,
and that prior to the layer (26) being displaced the edge region (60) of the supporting element (58) can be moved over the folded-down lateral wall (174) so as to overlap with the base part (173) which defines the upper loading surface.

13. Device according to any one of the claims 1 to 12,
characterised in that the palletizing station (33) comprises a tower (109),
that the plane of displacement (83) is disposed above an open upper end of the tower (109),
that the empty pallet (35) can be conveyed in the tower (109) on to a support device (145) located in the lowest position,
that the empty pallet (34) can be lifted by virtue of the support device (145) in the tower (109) with its upper loading surface substantially as far as into the plane of displacement (83),
and that the pallet (34) can be lowered by virtue of the support device (145) in a step-wise manner as far as into a plane of removal for the fully loaded pallet (34).

14. Device according to claim 13,
characterised in that the fully loaded pallet (34) can be set off in the plane of removal on to a plurality of conveyor chains (45) which are disposed at a spaced interval from each other.

15. Device according to claim 13 or 14,
characterised in that the support device (145) is attached to a carriage (137) by way of an extension arm (142) which extends out of the tower (109) in a lateral manner,
and that by virtue of a drive (126) the carriage (137) can be moved on a vertical carriage track (118) which is disposed adjacent to the tower (109).

16. Device according to any one of the claims 13 to 15,
characterised in that immediately below the plane of displacement (83) the tower (109) comprises a centring frame (149) which centres the empty pallet (34) and each layer (26) when same are lowered.

17. Device according to any one of the claims 13 to 16,
characterised in that the tower (109) is provided on all sides with guide plates (152 to 156) for the purpose of guiding in a lateral manner the pallet (34) and the layers (26) on the pallet (34) and for the purpose of automatically folding up or holding up the first folded-down lateral wall (174) of the bases (172) of the base packing.

18. Device according to claim 17,
characterised in that on a side of the tower (109) which releases the loaded pallet (34) from the tower (109) at least one guide plate (154; 155), which can be pivoted about a vertical axis (159; 160), is provided as a door leaf,
and that an inner surface (164) of at least one door leaf (155) is aligned in the pivoted open state at least approximately with an inner surface (165) of a guide plate (156) of the adjacent side of the tower (109).

19. Device according to claim 18,
characterised in that an attachment station (47) is disposed immediately downstream of the at least one door leaf (155) which is pivoted open,
that the attachment station (47) comprises guide elements, whose inner surface (166), facing the loaded pallet (48), is aligned with the inner surface (164) of the door leaf (155) which is pivoted open,
and that in the attachment station (47) the still folded-up lateral wall (174) of each base (172) of the base packing can be attached to the adjacent lateral walls (175, 177) of the base.

## Revendications

1. Dispositif (32) destiné au transport d'une couche (26) préalablement formée avec des récipients en verre (4) disposés verticalement depuis un support (20) vers une palette (34) disposée dans un poste de palettisation (33),
dans lequel la couche (26) disposée sur le support (20) peut être déplacée par un dispositif de translation (51) sur un plan de translation (83) pour quitter le support (20) et venir sur la palette (34),
dans lequel la palette (34) peut être abaissée sur une division de la hauteur sous le plan de translation (83) pour recevoir une couche (26) suivante,
dans lequel le dispositif de translation (51) peut être ramené dans sa position de départ pour prendre en charge la couche (26) suivante,
dans lequel la palette (34) dont le chargement avec les couches (26) est terminé peut être enlevée du poste de palettisation (33),
et dans lequel une palette vide (35) suivante peut être positionnée dans le poste de palettisation (33) avec une surface de chargement supérieure dans le plan de translation (83),
caractérisé en ce que le dispositif de translation (51) comporte un cadre rectangulaire (52) avec quatre parois latérales (53 à 56),
en ce qu'un premier écart entre deux parois opposées (53, 55) faisant partie des parois latérales (53 à 56) est égal à la largeur (31) de la couche (26),
en ce qu'un deuxième écart entre les deux autres parois latérales (54, 56) est égal à la longueur (30) de la couche (26),
et en ce que la couche (26) présente sur le support (20) peut être logée dans le cadre (52).

2. Dispositif selon la revendication 1, caractérisé en ce que le support est conçu comme une courroie de transport de couches (20),
en ce que le dispositif de translation (51) se trouve au-dessus de la courroie de transport de couches (20) dans sa position de départ,
et en ce qu'une paroi latérale mobile (53 ; 56) du dispositif de translation (51) est orientée vers la couche (26) à prendre en charge, la paroi latérale mobile (53 ; 56) pouvant être écartée du trajet de la couche (26) pour la prise en charge de la couche (26) et ramenée à sa position fermant le cadre (52) après la prise en charge de la couche (26).

3. Dispositif selon la revendication 2, caractérisé en ce que le cadre (52) présente deux parois latérales (53, 56) contiguës pouvant au choix être retirées du trajet de la couche (26) et ramenées en position.

4. Dispositif selon la revendication 2 ou 3, caractérisé en ce que chaque paroi latérale mobile (53 ; 56) peut être relevée et abaissée autour d'un axe horizontal (103 ; 105).

5. Dispositif selon l'une ou l'ensemble des revendications 1 à 4, caractérisé en ce que le dispositif de translation (51) peut pivoter autour d'un axe vertical (63).

6. Dispositif selon l'une ou l'ensemble des revendications 1 à 5, caractérisé en ce qu'une piste de chariot stationnaire (62) est disposée dans une zone de déplacement du dispositif de translation (51),
en ce qu'un chariot (61) est maintenu sur la piste de chariot (62) avec possibilité de déplacement,
et en ce que le dispositif de translation (51) est disposé sur le chariot (61).

7. Dispositif selon la revendication 6, caractérisé en ce qu'un organe d'entraînement flexible (69) est fixé sur le chariot (61),
en ce que l'organe d'entraînement (69) est guidé par-dessus des galets de renvoi (70, 71) aux extrémités de la piste de chariot (62),
et en ce que l'un (71) au moins des galets de renvoi (70, 71) peut être entraîné (72) en rotation.

8. Dispositif selon la revendication 6 ou 7, caractérisé en ce que le chariot (61) comporte un cadre (84) pouvant rouler à l'aide de galets (85, 86, 88, 89, 91, 92, 93) sur des pistes (87, 90, 93, 95) de la piste de chariot (62),
et en ce qu'un bras (96) portant le dispositif de translation (51) est monté sur le cadre (84).

9. Dispositif selon l'une ou l'ensemble des revendications 6 à 8, caractérisé en ce qu'un arbre (99) concentrique de l'axe vertical (63) est supporté sur le chariot (61) de manière à pouvoir être entraîné en rotation,
et en ce que le dispositif de translation (51) est monté sur l'arbre (99).

10. Dispositif selon la revendication 9, caractérisé en ce qu'une manivelle (100) est fixée sur l'arbre (99),
en ce qu'un servomoteur électrique (64) présentant une manivelle d'entraînement (101) est monté sur le chariot (61),
et en ce que la manivelle d'entraînement (101) et la manivelle (100) sont reliées l'une à l'autre de manière articulée par une tringle de couplage (102).

11. Dispositif selon l'une ou l'ensemble des revendications 1 à 10, caractérisé en ce qu'un élément de support (58) est disposé entre le support (20) et la surface de chargement supérieure de la palette (34) à charger,
en ce que chaque couche (26) peut être déplacée par le dispositif de translation (51) sur la surface de chargement supérieure au-delà de l'élément de support (58),
en ce qu'au moins une zone de bord (60) de l'élément de support (58) orientée vers la palette (34) présente une épaisseur relativement réduite,
et en ce que la zone de bord (60) peut être amenée en chevauchement par-dessus la surface de chargement supérieure avant la translation de la couche (26) et ramenée dans une position de départ après la translation.

12. Dispositif selon la revendication 11, caractérisé en ce que pour un emballage avec fonds, dans lequel un fond (172) comportant une partie rectangulaire (173) et quatre parois latérales (174 à 177) s'étendant vers le haut est introduit sous la couche (26) inférieure et entre les couches (26) successives sur la palette (34), une paroi latérale (174) de chaque fond (172) orientée vers la couche (26) à déplacer est rabattue au moins jusqu'à l'horizontale,
et avant le déplacement de la couche (26) la zone de bord (60) de l'élément support (58) peut être déplacée au-dessus de la paroi latérale (174) en chevauchement supérieur avec la partie de fond (173) définissant la surface de chargement supérieur,

13. Dispositif selon l'une ou l'ensemble des revendications 1 à 12, caractérisé en ce que le poste de palettisation (33) comporte une tourelle (109),
en ce que le plan de translation (83) est disposé au-dessus d'une extrémité supérieure ouverte de la tourelle (109),
en ce que la palette vide (35) peut être transportée dans la tourelle (109) sur un dispositif de transport (145) dans une position basse,
en ce que la palette vide (34) peut être soulevée par le dispositif de transport (145) dans la tourelle (109) jusqu'à ce que sa surface de chargement supérieure se trouve sensiblement au niveau du plan de translation (83),
et en ce que la palette (34) peut être progressivement abaissée par le dispositif de transport (145) jusqu'au niveau de retrait de la palette pleine (34).

14. Dispositif selon la revendication 13, caractérisé en ce que la palette pleine (34) peut être déposée à l'étage de retrait sur plusieurs chaînes de transport (45) espacées les unes des autres.

15. Dispositif selon la revendication 13 ou 14, caractérisé en ce que le dispositif de transport (145) est fixé sur un bras (142) d'un chariot (137) qui s'étend latéralement hors de la tourelle(109),
et en ce que le chariot (137) peut être déplacé par un entraînement (126) sur une piste de chariot (118) verticale disposé à côté de la tourelle (109).

16. Dispositif selon l'une ou l'ensemble des revendications 13 à 15, caractérisé en ce que la tourelle (109) présente, juste en-dessous du plan de translation (83), un cadre de centrage (149) qui centre la palette vide (34) et chaque couche (26) au moment où celles-ci sont abaissées.

17. Dispositif selon l'une ou l'ensemble des revendications 13 à 16, caractérisé en ce que la tourelle (109) est pourvue de toutes parts de plaques de guidage (152 à 156) servant au guidage latéral de la palette (34) et des couches (26) sur la palette (34) et au rabattement ou au maintien en hauteur automatique de la paroi latérale (174) des fonds (172) de l'emballage avec fonds qui a d'abord été rabattue vers le bas.

18. Dispositif selon la revendication 17, caractérisé en ce qu'au moins une plaque de guidage (154 ; 155) rotative autour d'un axe vertical (159 ; 160) est prévue sur le côté de la tourelle (109) par lequel sort la palette chargée (34) afin de servir de battant de porte,
et en ce qu'une surface intérieure (164) d'au moins un battant de porte (155) est au moins approximativement alignée, lorsque le battant est ouvert, avec une surface intérieure (165) d'une plaque de guidage (156) de la face voisine de la tourelle(109).

19. Dispositif selon la revendication 18, caractérisé en ce qu'un poste d'agrafage (47) est prévu tout de suite après le battant de porte ouvert (155) au nombre d'un au moins,
en ce que le poste d'agrafage (47) présente des éléments de guidage dont la surface intérieure (166) orientée vers la palette chargée (48) est alignée avec la surface intérieure(164) du battant de porte ouvert (155),
et en ce que la paroi latérale (174) encore relevée de chaque fond (172) de l'emballage avec fond peut être agrafée aux parois latérales (175, 177) contiguës du fond (172) dans le poste d'agrafage (47).
